## Europäisches Patentamt
## European Patent Office
## Office européen des brevets

(11) Veröffentlichungsnummer: **0 085 382**
**A1**

# EUROPÄISCHE PATENTANMELDUNG

(21) Anmeldenummer: **83100631.7**

(22) Anmeldetag: **25.01.83**

(51) Int. Cl.³: **C 04 B 11/02**

(30) Priorität: **01.02.82 DE 3203242**
**24.12.82 DE 3247933**

(43) Veröffentlichungstag der Anmeldung:
**10.08.83 Patentblatt 83/32**

(84) Benannte Vertragsstaaten:
**AT CH DE FR GB IT LI LU NL SE**

(71) Anmelder: **Salzgitter Maschinen und Anlagen Aktiengesellschaft**
**Windmühlenbergstrasse 20-22**
**D-3320 Salzgitter 51(DE)**

(72) Erfinder: **Schmidt, Hans**
**Neuroder Strasse 19**
**D-3381 Heimerode(DE)**

(72) Erfinder: **Lampe, Gerhard, Dr.-Ing.**
**Im Lindenfeld 9**
**D-3340 Wolfenbüttel(DE)**

(74) Vertreter: **Kosel, Peter, Dipl.-Ing. et al,**
**Patentanwälte Dipl.-Ing. Horst Röse Dipl.-Ing. Peter Kosel Postfach 129 Odastrasse 4a**
**D-3353 Bad Gandersheim(DE)**

(54) **Vorrichtung zur Herstellung von Alpha-Calciumsulfat-Halbhydrat.**

(57) Bei der Calcinierung von Calciumsulfat-Dihydrat in Dispersion in einem Calciniermedium zu α-Calciumsulfat-Halbhydrat wird die Dispersion kontinuierlich hergestellt und in einem ununterbrochenen Strom entlang einem Calcinierungsweg bewegt, der einen Calcinierungskanal (13) aus aufeinanderfolgenden Calcinierungskammern (9) mit dazwischen liegenden Verbindungen (106) definiert. Die Calcinierungskammern können durch gegebenenfalls beheizbare Trennwände begrenzt sein. Jede Calcinierungskammer kann auch von einem Behälter umschlossen sein, die durch verhältnismäßig kurze Leitungen miteinander verbunden sind. Der Calcinierungskanal kann ferner von einem in Windungen geformten Rohr umschlossen sein, das z.B. schraubenartig ausgebildet ist. Die Dispersion kann auch durch eine Anzahl Calcinierungskammern (9) in vorzugsweise stehend angeordneten Behältern (80 bis 82) geleitet werden. Wenigstens zwei Behälter (80 bis 82) können in Reihe geschaltet sein und jeweils eine Anzahl Rohre (96) zwischen Rohrböden (94,95) aufweisen, wobei ein Zwischenraum (100) zwischen den Rohren (96) von einem Heizmedium durchströmt wird. Alle Calcinierungskammern können auch innerhalb eines gemeinsamen Behälters in Reihe geschaltet sein, wobei Trennwände Deckelraumteile und Bodenraumteile schaffen, durch die die Dispersion mehrfach fallend und aufsteigend umgelenkt wird. Jede Calcinierungskammer kann auch in einem gesonderten Behälter mit einem Rührwerk vorgesehen sein, wobei wenigstens drei solche Behälter zueinander parallel geschaltet sind. Absperrorgane am Einlaß und Auslaß der Behälter gestatten eine abwechselnde Benutzung der Behälter für aufeinander folgende Verfahrensschritte.

./...

FIG. 10

**DIPL.-ING. HORST RÖSE   DIPL.-ING. PETER KOSEL**

**PATENTANWÄLTE**

O085382

Unsere Akten-Nr.: 1774/867$_{EP}$ Bad Gandersheim, 24. Januar 1983
Salzgitter Maschinen und
Anlagen Aktiengesellschaft

## Vorrichtung zur Herstellung von α-Calciumsulfat-Halbhydrat

Die Erfindung betrifft eine Vorrichtung gemäß dem Oberbegriff des Patentanspruchs 1.

Ein bekanntes Verfahren (DE-Auslegeschrift 1 274 488) ist u.a. auf die kontinuierliche Herstellung eines α-Calciumsulfat-Halbhydrats von ausreichender Reinheit aus einem als Nebenprodukt erhaltenen Calciumsulfat-Dihydrat gerichtet. Als Calciniermedium dient heiße Schwefelsäure, ggf. mit die Kristallisation beeinflussenden Mitteln und/oder Impfkristallen. Eine Vorrichtung zur Durchführung dieses Verfahrens ist nicht offenbart.

Der Erfindung liegt die Aufgabe zugrunde, eine Vorrichtung für die kontinuierliche Herstellung des α-Calciumsulfat-Halbhydrats zu schaffen, mit der der Reaktionsablauf entlang dem Calcinierungsweg günstig und reproduzierbar gestaltet werden und α-Calciumsulfat-Halbhydrat von hoher Qualität gewonnen werden kann.

Diese Aufgabe ist durch die im Kennzeichnungsteil des Anspruchs 1 angegebenen Merkmale gelöst. Es kann z.B. als Nebenprodukt erhaltener Rauchgasentschwefelungsgips oder Chemiegips verarbeitet werden. Die kontinuierliche Arbeitsweise erleichtert die Prozeßautomatisierung und gestattet zum einen die Herstellung eines Produkts von gleichmäßigerer Qualität und zum anderen eine leichtere Integration dieses Verfahrens in benachbarte Herstellungsprozesse. Die Herstellung der Dispersion aus ihren Komponenten kann entweder zu Beginn des Calcinierungswegs durch

-2-
PK/J

dortige Vermischung oder durch Dosierung und Mischung vor Einspeisung in den Calcinierungsweg geschehen. Die Gesamtreaktionsdauer soll für die Dispersion z.B. 20 min betragen.

Die Prozeßführung kann dem idealen Calcinierungsverlauf optimal angepaßt werden. Die Wirtschaftlichkeit der Calcinierung kann gesteigert werden. Der Calcinierungskanal läßt sich verhältnismäßig einfach und kostengünstig aufbauen und bei Bedarf im Baukastenprinzip verlängern oder verkürzen.

Die Maßnahmen gemäß Anspruch 2 oder 3 sind konstruktiv und für den Betrieb besonders günstig.

Aufgrund Anspruch 4 wird die Dispersion in "Schlangenlinien" geführt. Durch die ständigen Richtungsänderungen der Strömung wird ein günstiger Mischeffekt innerhalb der Dispersion erreicht und damit einerseits eine Entmischung verhindert und andererseits die Reaktion begünstigt.

Die Merkmale des Anspruchs 5 gestatten eine besonders einfache, bei Bedarf längs des Calcinierungswegs differenzierte Temperaturführung der Dispersion.

Der Auslaß gemäß Anspruch 6 ist besonders einfach. Seine Höhenverstellung ermöglicht bei in der Zeiteinheit gleichbleibender durchgesetzter Dispersionsmenge auf einfache Weise eine Einflußnahme auf die Aufenthaltsdauer der Dispersion in dem Calcinierungskanal.

Gemäß Anspruch 7 können z.B. genormte, handelsübliche Rührbehälter, ggf. mit äußerem Heizmantel, verwendet werden, wie sie z.B. von der Firma Pfaudler-Werke AG, Scheffelstraße 55, D-6830 Schwetzingen, geliefert werden. In jedem Fall kann auf einfache, kostengünstige und bewährte Behälter zurückgegriffen werden. Die verhältnismäßig kurzen Verbindungen verhindern eine unerwünschte Sedimentation der Feststoffe der Dispersion.

Dem gleichen Ziel dienen die Maßnahmen gemäß Anspruch 8.

Gemäß Anspruch 9 kann der Auslaß normalerweise durch einen serienmäßig vorhandenen Auslaß im oberen Bereich des letzten Behälters gebildet werden. Unterschiedlich hoch angeordnete Auslaßstutzen können wahlweise dicht verschlossen oder geöffnet werden und erlauben dann eine Einflußnahme auf die Verweildauer der Dispersion in dem Calcinierungskanal.

Die Maßnahmen des Anspruchs 10 gestatten eine beliebige örtliche Zugabe von Calciniermedium, wenn durch Ausscheidung von Kristallwasser längs dem Calcinierungsweg eine zu hohe Verdünnung des Calciniermediums eintritt.

Gemäß Anspruch 11 läßt sich eine weitgehend selbsttätige und homogene Vermischung der Dispersion mit dem zugeführten Calciniermedium erreichen.

Gemäß Anspruch 12 kann diese Vermischung bei Bedarf örtlich gezielt ergänzt oder verstärkt werden.

Durch die Merkmale des Anspruchs 13 läßt sich mit einfachen Mitteln eine wechselweise Beschleunigung oder Verzögerung der Dispersionsströmung erreichen. Dadurch erübrigt sich in manchen Fällen zusätzliches Rühren der Dispersion.

Anspruch 14 kennzeichnet eine Vorrichtung, die vollständig ohne bewegte Teile auskommt. Entsprechend einfach und störunanfällig ist der Aufbau. Vorzugsweise liegt die Längsachse des Calcinierungskanals zumindest annähernd waagerecht. Zweckmäßigerweise ist das Rohr vollständig mit der Dispersion gefüllt.

Die Ausbildung gemäß Anspruch 15 ist fertigungstechnisch günstig und beansprucht verhältnismäßig wenig Raum.

Die Merkmale des Anspruchs 16 dienen der fertigungstechnischen Erleichterung insbesondere dann, wenn die Innenfläche des Rohres korrosionsgeschützt, insbesondere emailliert, werden soll. Evtl. Verstopfungen aufgrund von Sedimentation der Feststoffe lassen sich leicht beseitigen.

Die Merkmale des Anspruchs 17 gestatten eine feinfühlige Zugabe von Calciniermedium an den gewünschten Stellen entlang dem Calcinierungsweg.

Die Heizvorrichtung gemäß Anspruch 18 ist fertigungstechnisch einfach und gestattet dennoch eine hinreichende Temperierung der Dispersion.

Bei einer Vorrichtung mit den Merkmalen des Anspruchs 19 ist der bauliche Aufwand verhältnismäßig gering. Die Geschoßhöhe der solche Vorrichtungen aufnehmenden Fabrikhallen liegt normalerweise zwischen 4,50 m und 5,00 m. Vorzugsweise werden deshalb stehend angeordnete Behälter in Standardlänge im Bereich dieser Geschoßhöhe eingesetzt. Bei Bedarf können die Einzelbehälter auch länger sein, z.B. ein Vielfaches der Geschoßhöhe. Der Mittelteil jedes Behälters mit den Rohren und Rohrböden eignet sich ausgezeichnet für eine wirkungsvolle und gleichmäßige Temperierung der im Innenraum der Rohre strömenden Dispersion. Die Kapazität der Vorrichtung wird vorzugsweise über den Durchmesser der Behälter variiert. Es findet daher bei in der Länge vorzugsweise standardisierten Behältern eine Modultechnik Anwendung. Die Gesamtreaktionsdauer soll auch hier für die Dispersion ungefähr 20 min betragen. Der freie Durchmesser der in den Behältern verwendeten Rohre soll möglichst nicht größer als 100 mm sein. Die Strömungsgeschwindigkeit der Dispersion in den Rohren soll größer sein als die Sinkgeschwindigkeit der Feststoffpartikel in der Trägerflüssigkeit der Dispersion. Dadurch wird mit einfachen Mitteln eine Entmischung der Dispersion verhindert. Eine Entmischung würde bedeuten, daß die einzelnen Feststoffpartikel nicht mehr optimal reagieren können. Vielmehr würden sich Agglomerate bilden, die zum Anbacken neigen und zum Zusetzen der Rohre führen können. Wenn dies dennoch einmal geschehen sollte, können die zugefahrenen Rohre verhältnismäßig leicht mit einer unter Überdruck stehenden Spülflüssigkeit freigespült werden.

Gemäß Anspruch 20 kann das Spülgemisch dann durch die Auslaßleitungen der Behälter in eine Auffangwanne eingeleitet, aufbereitet und rezirkuliert werden.

Gemäß Anspruch 21 ergibt sich eine für alle Behälter gleiche Durchströmung mit der Dispersion von oben nach unten. Dies gestattet die baulich gleiche Ausbildung der Behälter.

Da gemäß Anspruch 22 nur ein einziger Behälter Verwendung findet, ergibt sich eine insgesamt sehr kompakte, nur geringen Raum beanspruchende Vorrichtung. Bei größerem Leistungsbedarf können z.B. mehrere derartige Vorrichtungen parallel zueinander betrieben werden.

Die Merkmale des Anspruchs 23 stellen sicher, daß auch in den Rohren mit steigender Strömungsrichtung der Dispersion die Feststoffpartikel entgegen der Schwerkraft vollständig nach oben durch die Trägerflüssigkeit mitgenommen werden. Eine Entmischung der Dispersion ist dadurch vermieden. Die kleinere freie Querschnittsfläche läßt sich z.B. durch weniger Rohre oder Rohre kleineren Durchmessers als in den Calcinierungskammern mit fallender Strömungsrichtung realisieren.

Gemäß Anspruch 24 ergibt sich eine verhältnismäßig einfache Überleitung der Dispersion von der einen Calcinierungskammer in die nächste.

Die Zwangsförderpumpe gemäß Anspruch 25 erhält die gewünschte Strömungsgeschwindigkeit der Dispersion aufrecht. Es kann z.B. eine Kolben-, Zahnrad- oder Schraubenspindelpumpe verwendet werden. Zur Leistungsanpassung kann die zeitliche Fördermenge der Zwangsförderpumpe einstellbar sein. Die Mischvorrichtung kann z.B. als vergleichsweise einfacher und störunanfälliger Drallmischer ausgebildet sein.

Mit den Merkmalen des Anspruchs 26 sind die Behälter verhältnismäßig einfach im Aufbau und daher kostengünstig. Das Rührwerk verhindert einerseits ein Absetzen der Feststoffe der Dispersion am Boden des Behälters und gewährleistet andererseits eine gleichmäßige Erwärmung durch die z.B. als äußerer Heizmantel des Behälters ausgebildete Heizeinrichtung. Während ein erster Behälter mit frischer Dispersion gefüllt wird, läuft in dem nächsten die Reaktion ab und wird aus dem dritten Behälter das $\alpha$-Calciumsulfat-Halbhydrat abgelassen. Wenn ein vierter und gegebenenfalls noch weitere Behälter vorgesehen sind, dienen diese als Reservebehälter, die entweder reihum in den Zyklus einbezogen oder ungenutzt in Reserve verbleiben können, bis einer der aktiven Behälter ausfällt oder zu Wartungs- oder Überprüfungszwecken aus dem Betrieb genommen wird. Die Beschickung und Entleerung der Behälter geschieht reihum steuerbar durch eine übergeordnete Programmsteuerung in an sich bekannter Weise.

Gemäß Anspruch 27 läßt sich der Wirkungsgrad der Behälter durch gezielte Führung der Strömung der Dispersion verbessern.

Die Merkmale des Anspruchs 28 dienen der Vereinfachung der Beschickung der einzelnen Behälter mit den betreffenden Komponenten der Dispersion. Als Fördervorrichtung kommt z.B. eine Förderschnecke zum Einsatz.

Als Mischvorrichtung gemäß Anspruch 29 kommt z.B. ein Drallmischer in Betracht, in dem z.B. als Hauptkomponente das Calciumsulfat-Dihydrat und als Nebenkomponente schwefelsaure Salze des Magnesiums, insbesondere Magnesiumsulfat, miteinander vermischt werden, bevor sie in die Fördervorrichtung eingetragen werden.

Mit den Merkmalen des Anspruchs 30 ergibt sich eine Vorrichtung mit optimal kurzen Verbindungsleitungen und relativ geringem Grundflächenbedarf. Die einzelnen Behälter bleiben weiterhin sehr gut für Montage- und Wartungszwecke von allen Seiten zugänglich.

Die Erfindung wird nachfolgend anhand der in den Zeichnungen dargestellten Ausführungsbeispiele näher erläutert. Es zeigen:

Fig. 1 die Draufsicht auf eine Calciniervorrichtung mit schlangenlinienartigem Calcinierungskanal,

Fig. 2 die Schnittansicht nach Linie 2-2 in Fig. 1,

Fig. 3 die Schnittansicht nach Linie 3-3 in Fig. 1,

Fig. 4 die Schnittansicht nach Linie 4-4 in Fig. 1,

Fig. 5 die Draufsicht auf eine andere Calciniervorrichtung mit miteinander verbundenen Behältern,

Fig. 6 die Schnittansicht nach Linie 6-6 in Fig. 5,

Fig. 7 einen Längsschnitt durch einen gegenüber Fig. 5 und 6 abgewandelten Behälter,

Fig. 8 einen Längsschnitt durch eine weitere Calciniervorrichtung mit schraubenartigem Calcinierungskanal gemäß Linie 8-8 in Fig. 9,

Fig. 9 die Schnittansicht nach Linie 9-9 in Fig. 8,

Fig. 10 die teilweise längs geschnittene Seitenansicht einer Vorrichtung mit drei in Reihe geschalteten Behältern,

Fig. 11 einen Längsschnitt gemäß Linie 11-11 in Fig. 12 durch eine andere, nur einen Behälter aufweisende Ausführungsform,

Fig. 12 die Schnittansicht nach Linie 12-12 in Fig. 11,

Fig. 13 eine teilweise geschnittene Seitenansicht einer anderen Ausführungsform mit vier parallel geschalteten Behältern in Reihenanordnung und

Fig. 14 die Draufsicht auf eine weitere Ausführungsform mit ebenfalls vier parallel geschalteten, jedoch auf einem Kreis angeordneten Behältern.

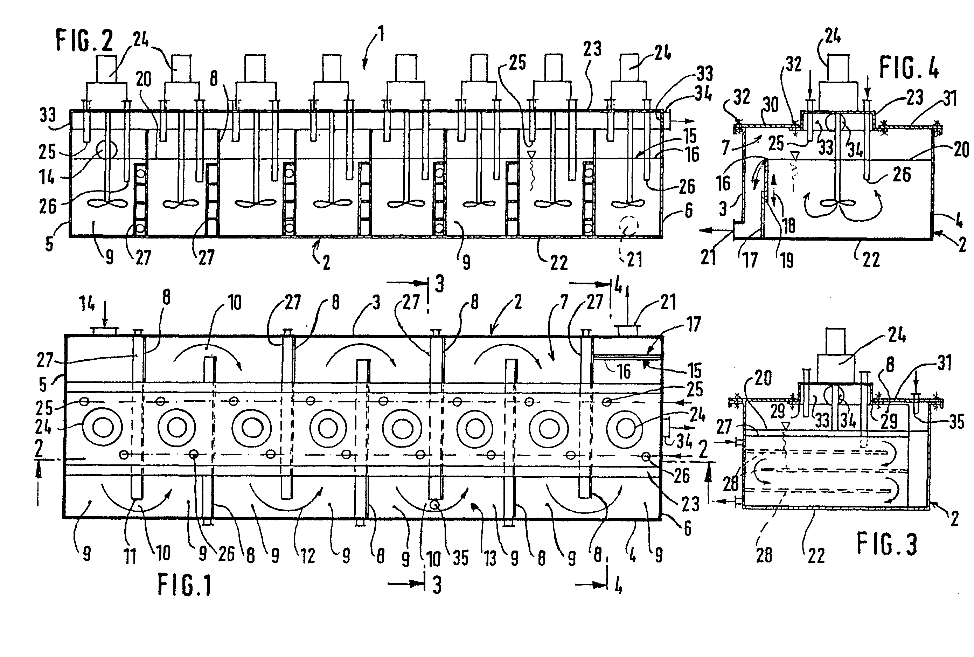

In Fig. 1 weist eine Calcinierungsvorrichtung 1 ein rechteckiges Gefäß 2 mit gegenüberliegenden Seitenwänden 3 und 4 sowie Stirnwänden 5 und 6 auf. Das Gefäß 2 umschließt einen Calcinierungsraum 7, der durch Trennwände 8 in aufeinanderfolgende Calcinierungskammern 9 unterteilt ist.

Benachbarte Calcinierungskammern 9 sind jeweils durch eine Verbindung 10 miteinander verbunden. Jede Verbindung 10 ist durch einen Abstand einer Endfläche 11 einer der Trennwände 8 von der gegenüberliegenden Seitenwand 3 oder 4 definiert. Da bei aufeinanderfolgenden Trennwänden 8 die Verbindung 10 jeweils abwechselnd an den Seitenwänden 3,4 liegen, bildet sich in dem Gefäß 2 eine im wesentlichen schlangenlinienartige Strömung einer Dispersion aus, die durch Pfeile 12 angedeutet ist. Diese Strömung definiert einen Calcinierungsweg und durchläuft einen durch die Calcinierungskammern 9 und die Verbindungen 10 definierten Calcinierungskanal 13.

In Fig. 1 wird die Dispersion aus Calciumsulfat-Dihydrat und einem Calciniermedium außerhalb der Calcinierungsvorrichtung 1 dosiert und angemischt und durch einen Einlauf 14 kontinuierlich in die in Fig. 1 ganz links liegende Calcinierungskammer 9 eingegeben. Die Dispersion durchströmt anschließend den Calcinierungskanal 13 und gelangt schließlich in die in Fig. 1 rechts außen liegende Calcinierungskammer 9 mit einem Auslaß 15, der durch eine Überlaufkante 16 eines Wehrs 17 definiert ist.

Wie Fig. 4 im einzelnen zeigt, weist das Wehr 17 eine obere, in Richtung eines Doppelpfeils 18 in der Höhe einstellbare Platte 19 auf, mit der die Höhenlage der Überlaufkante 16 und damit eines Dispersionsspiegels 20 in dem Calcinierungskanal 13 einstellbar ist.

Entlang dem Calcinierungskanal 13 findet die Calcinierung der Dispersion zu $\alpha$-Calciumsulfat-Halbhydrat statt, das schließlich über die Überlaufkante 16 gemäß Fig. 4 in einen Auslauf 21 des Gefäßes 2 strömt. Der Auslauf 21 liegt mit seiner Unterkante höhengleich mit einem Boden 22 des Gefäßes 2.

Auf den Stirnwänden 5,6 ist eine Brücke 23 abgestützt, an der Rührer 24 montiert sind, die jeweils in eine der Calcinierungskammern 9 ragen. Die Brücke 23 trägt ferner für jede der Calcinierungskammern 9 einen Stutzen mit einer Einlaßöffnung 25 für Calciniermedium, dessen Zustrom durch die Einlaßöffnungen 25 hindurch in die zugehörige Calcinierungskammer 9 jeweils durch nicht dargestellte Mittel gesteuert oder geregelt dosiert werden kann.

Die Brücke 23 trägt außerdem für jede Calcinierungskammer 9 einenStutzen mit einer unterhalb des Dispersionsspiegels 20 mündenden Einlaßöffnung 26 (Fig. 2 und 4) für ein gasförmiges Heizmedium. Die Zufuhr dieses Heizmediums kann durch nicht dargestellte, an sich bekannte Mittel gesteuert oder geregelt dosiert werden.

Anstelle der die Einlaßöffnungen 26 tragenden Stutzen oder zusätzlich zu diesen Stutzen können die Trennwände 8 gemäß den Fig. 1 bis 3 beheizbar ausgebildet sein. Dazu ist an jeder Trennwand 8 ein Heizregister 27 befestigt, dessen Einzelheiten die Fig. 2 und 3 zeigen. Ein gasförmiges und/oder flüssiges Heizmedium strömt gemäß Fig. 3 in Pfeilrichtung durch das Heizregister 27, wobei innere Leitwände 28 für eine Verlängerung des Strömungsweges und verbesserte Wärmeabgabe sorgen.

Auf Flanschen 29 der Brücke 23 und den Seitenwänden 3,4 liegen durchgehende Abdeckplatten 30 und 31 abgedichtet auf, die durch Schrauben 32 gehalten sind (Fig. 3 und 4). So ist der Calcinierungsraum 7 gegenüber der Umgebung des Gefäßes 2 hermetisch abgeschlossen, da auch die stirnseitigen Enden der Brücke 23 mit einer Abschlußwand 33 verschlossen sind. In der in Fig. 2 rechten Abschlußwand 33 befindet sich ein Stutzen 34 für eine Aspiration.

Die Figuren 1 und 3 zeigen einen Stutzen mit einer Einlaßöffnung 35, die im Bereich einer der Verbindungen 10 mündet. Auch im Bereich der übrigen Verbindungen 10 können derartige Stutzen mit Einlaßöffnungen 35 vorgesehen sein zusätzlich zu den Einlaßöffnungen 25 oder an deren Stelle. Durch die Einlaßöffnungen 35 kann Calciniermedium an Stellen der Dispersion zugegeben werden, an denen die Dispersion eine verhältnismäßig hohe Strömungsgeschwindigkeit, also besonders gute Mischfähigkeit aufweist, da die Querschnittsfläche der Verbindung 10 geringer ist als die Querschnittsfläche der angrenzenden Calcinierungskammern 9.

In den nachfolgenden Figuren sind jeweils gleiche Teile wie in den Fig. 1 bis 4 mit gleichen Bezugszahlen versehen.

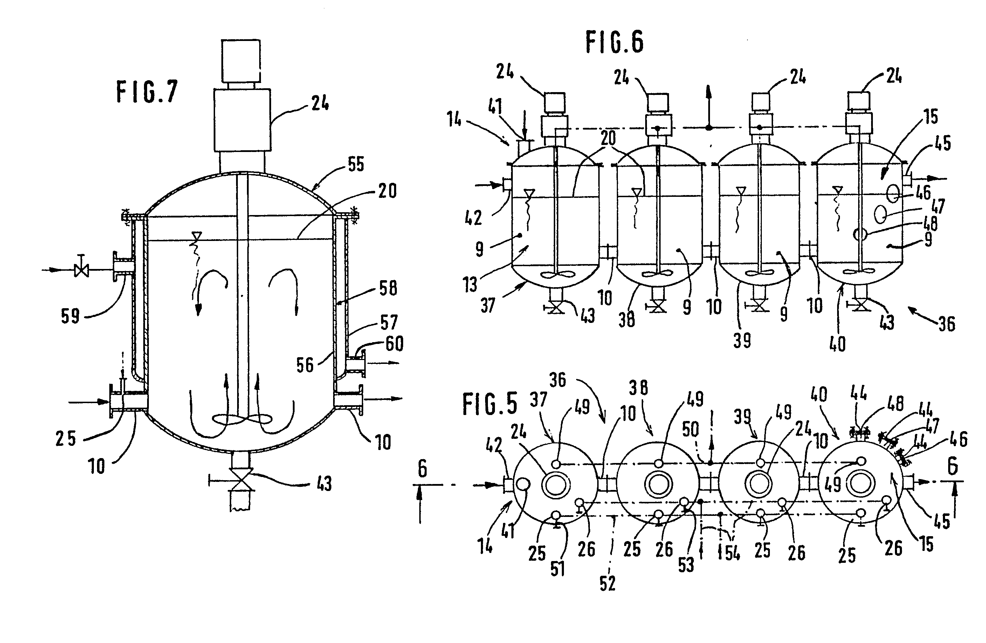

Bei einer Calcinierungsvorrichtung 36 gemäß Fig. 5 und 6 ist jede Calcinierungskammer 9 von einem stehend angeordneten Behälter 37 bis 40 umschlossen. Jede der Verbindungen 10 ist als verhältnismäßig kurze Leitung ausgebildet, die waagerecht verläuft und jeweils untere Bereiche der Behälter 37 bis 40 miteinander verbindet. Bei den Behältern 37 bis 40 kann es sich z. B. im wesentlichen um DIN-Rührbehälter handeln, wie sie in unterschiedlichen geeigneten Ausführungsformen handelsüblich sind.

Der Einlauf 14 weist an dem Behälter 37 einen Einlaßstutzen 41 für das Calciumsulfat-Dihydrat und einen weiteren Einlaßstutzen 42 für das Calciniermedium auf. In diesem Fall wird also die Dispersion aus den beiden zugeführten Komponenten erst innerhalb des Behälters 37 mit Hilfe des Rührers 24 hergestellt. Jeder Behälter weist an seinem Boden einen an sich bekannten Restablaß 43 auf.

Der Auslaß 15 ist durch jeweils durch einen Deckel 44 verschließbare Auslaßstutzen 45 bis 48 an dem Behälter 40 gebildet. Die Auslaßstutzen 45 bis 48 sind in unterschiedlichen Höhenebenen angeordnet, so daß sich durch Inbetriebnahme eines dieser Auslaßstutzen und Verschließen der übrigen Auslaßstutzen mit den Deckeln 44 der Dispersionsspiegel 20 jeweils auf eine entsprechende Höhenlage einstellen läßt.

Jeder der Behälter 37 bis 40 weist oben einen Entlüftungsstutzen 49 (Fig. 5) auf, der über eine Sammelleitung 50
mit einer Aspiration verbunden ist.

Die Einlaßöffnungen 25 für Calciniermedium sind jeweils
durch ein Ventil 51 in der Größe verstellbar und werden
durch eine gemeinsame Versorgungsleitung 52 mit Calciniermedium versorgt. In ähnlicher Weise sind die Einlaßöffnungen 26 für das Heizmedium jeweils durch ein Ventil 53 in
der Größe einstellbar und werden durch eine gemeinsame
Versorgungsleitung 54 mit einem gasförmigen Heizmedium versorgt.

Fig. 7 zeigt einen gemäß den Fig. 5 und 6 verwendbaren Behälter 55, dessen Mantel 56 im Abstand von einem Heizmantel
57 umgeben ist. Dazwischen ist eine ringförmige Heizkammer
58 definiert, der durch einen Stutzen 59 ein Heizmedium
zugeführt wird, das aus einem Stutzen 60 wieder aus der
Heizkammer 58 austritt. In diesem Fall können auch flüssige
Heizmedien verwendet werden. Das Heizmedium tritt nicht
unmittelbar mit der Dispersion in Berührung. Durch die Rührwirkung des Rührers 24 entsprechend den in Fig. 7 eingetragenen Pfeilen findet dennoch eine hinreichend gleichmäßige
Erwärmung der Dispersion in dem Behälter 55 statt.

In Fig. 7 mündet die Einlaßöffnung 25 für Calciniermedium
nicht oben in den Behälter wie in Fig. 5, sondern in die
die Verbindung 10 bildende kurze Leitung. So ist wegen der
in der Verbindung 10 herrschenden verhältnismäßig hohen
Strömungsgeschwindigkeit eine innige Vermischung des zugeführten Calciniermediums mit der Dispersion gewährleistet.

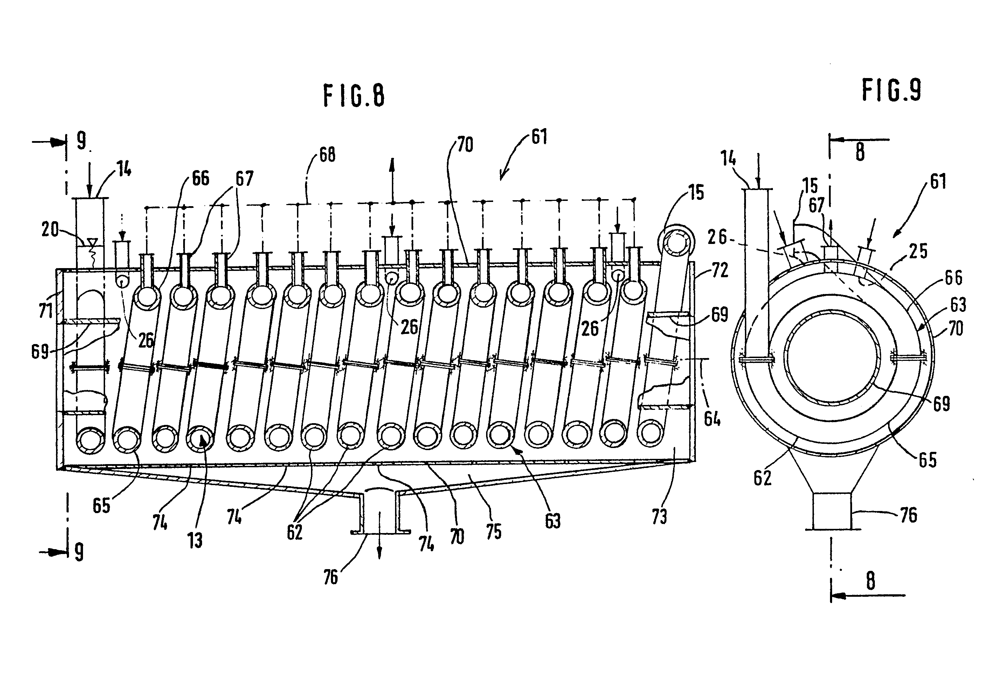

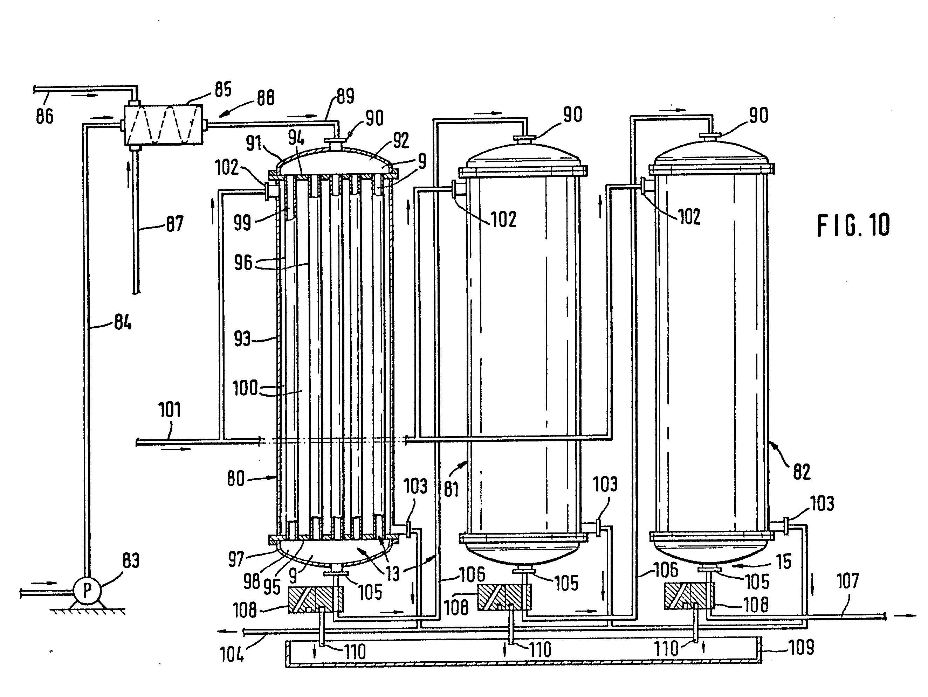

Bei einer Calcinierungsvorrichtung 61 gemäß Fig. 8 und 9
ist der Calcinierungskanal 13 von einem in Windungen 62
geformten Rohr 63 umschlossen. Eine Längsachse 64 des
schraubenartig geformten Rohres 63 verläuft waagerecht.

Jede Windung 62 ist aus quer zur Strömungsrichtung geteilten Teilen 65 und 66 lösbar zusammengesetzt. Jede Windung 62 weist oben einen Entlüftungsstutzen 67 auf, der über eine Sammelleitung 68 an eine Aspiration angeschlossen ist. Jede Windung 62 ist ferner mit der Einlaßöffnung 25 für Calciniermedium versehen, das im Sinne der zuvor beschriebenen Ausführungsbeispiele gesteuert oder geregelt in die betreffende Windung 62 eingespeist werden kann (Fig. 9).

Die Windungen 62 sind von einem Innenrohr 69 durchdrungen und von einem Außenrohr 70 umgeben, die jeweils an ihren Enden durch Stirnringe 71 und 72 dicht miteinander verbunden sind. Zwischen Innenrohr 69, Außenrohr 70 und Stirnringen 71,72 ist eine Heizkammer 73 ausgebildet, der durch die Einlaßöffnungen 26 Heizmedium auch unterschiedlicher Temperatur im Sinne der zuvor beschriebenen Ausführungsbeispiele gesteuert oder geregelt zugeführt werden kann. Nach Gebrauch verläßt das Heizmedium die Heizkammer 73 durch Durchbrechungen 74 unten in dem Außenrohr 70 und gelangt von dort über einen Sammelraum 75 zu einem Auslaßstutzen 76.

Die in Fig. 10 dargestellte Calcinierungsvorrichtung weist drei in Reihe geschaltete Behälter 80, 81 und 82 auf. Calciumsulfat-Dihydrat wird mit einer Zwangsförderpumpe 83 durch eine Leitung 84 in eine als Drallmischer ausgebildete Mischvorrichtung 85 gedrückt. Der Mischvorrichtung 85 wird ferner über eine Leitung 86 Calciniermedium und über eine Leitung 87 Magnesiumsulfat jeweils dosiert zugeführt. Dadurch ist eine Eingabeeinrichtung 88 geschaffen, die die fertige Dispersion über eine Leitung 89 kontinuierlich in einen Einlaßstutzen 90 des Behälters 80 einspeist. Jeder der Behälter 80 bis 82 ist in der gleichen Weise ausgebildet, so daß es genügt, die Einzelheiten des Behälters 80 näher zu beschreiben.

Der Behälter 80 weist einen Deckel 91 mit einem Deckel-

0085382

raum 92, ein kreiszylindrisches Mittelteil 93 mit endseitigen Rohrböden 94 und 95 sowie damit dicht verbundenen Rohren 96 und einen Boden 97 mit einem Bodenraum 98 auf. Innenräume 99 der Rohre 96, der Deckelraum 92 und der Bodenraum 98 jedes der Behälter 80 bis 82 bilden eine Calcinierungskammer 9, die ihrerseits Bestandteil des Calcinierungskanals 13 ist.

Ein Zwischenraum 100 zwischen den Rohren 96 wird von einem Heizmedium beliebiger geeigneter Art durchströmt, das über eine gemeinsame Versorgungsleitung 101 an einen Einlaßstutzen 102 jedes der Behälter 80 bis 82 geführt und nach dem Durchströmen des Zwischenraums 100 aus einem Auslaßstutzen 103 jedes Behälters 80 bis 82 austritt und mit einer Sammelleitung 104 abgeführt wird.

Normalerweise verläßt die Dispersion den Bodenraum 98 des Behälters 80 durch einen Auslaßstutzen 105 und gelangt über eine Leitung 106 in den Einlaßstutzen 90 des nächstfolgenden Behälters 81. Dies wiederholt sich, bis schließlich das $\alpha$-Calciumsulfat-Halbhydrat aus dem einen Auslaß 15 der Calcinierungsvorrichtung darstellenden Auslaßstutzen 105 des Behälters 82 durch eine Leitung 107 ausgetragen wird. In die Leitungen 106, 107 ist jeweils unterhalb des Auslaßstutzens 105 der Behälter 80 bis 82 ein Wegeventil 108 eingeschaltet, das normalerweise den soeben geschilderten Durchlauf der Dispersion durch die Calcinierungsvorrichtung gestattet. Zu Reinigungs- und Wartungszwecken oder zur Beseitigung von eventuellen Verstopfungen in den Behältern 80 bis 82 werden die Wegeventile 108 umgeschaltet, so daß eine Verbindung zwischen den Auslaßstutzen 105 und einer in eine Auffangwanne 109 mündenden Ablaßleitung 110 hergestellt ist. Dazu wird außerdem, z.B. durch die Einlaßstutzen 90, durch die Behälter 80 bis 82 eine Spülflüssigkeit unter geeignetem Druck hindurchgetrieben. Ist der Reinigungsvorgang abgeschlossen, wird nach Umschaltung der Wegeventile 108 wieder auf den normalen Calcinierungsbetrieb übergegangen.

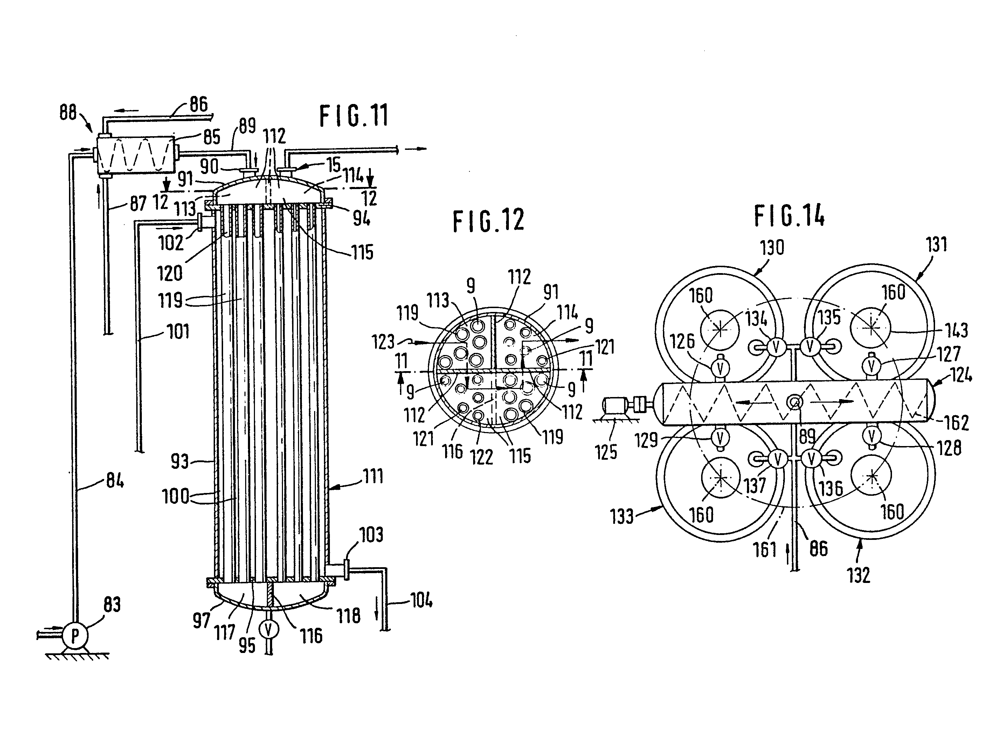

Die Fig. 11 und 12 zeigen eine andere Calcinierungsvorrichtung mit nur einem stehend angeordneten Behälter 111. Das Innere des Deckels 91 ist durch eine im Querschnitt (Fig. 12) T-förmige Trennwand 112 in Deckelraumteile 113 und 114 von viertelkreisförmiger Querschnittsfläche und einen Deckelraumteil 115 von halbkreisförmiger Querschnittsfläche unterteilt. Die Trennwand 112 erstreckt sich nach unten hin in dichte Berührung mit dem Rohrboden 94.

In ähnlicher Weise ist das Innere des Bodens 97 durch eine gerade, sich quer durch den gesamten Boden 97 erstreckende und in dichter Berührung mit dem Rohrboden 95 stehende Trennwand 116 in zwei gleich große, im Querschnitt halbkreisförmige Bodenraumteile 117 und 118 unterteilt.

Die Dispersion wird über die Leitung 89 in den Einlaßstutzen 90 des Deckels 91 und von dort in den Deckelraumteil 113 gedrückt. Von dem Deckelraumteil 113 gehen nach unten hin Rohre 119, die an dem Rohrboden 95 in den Bodenraumteil 117 münden. Innenräume 120 der Rohre 119 sind von verhältnismäßig großer Querschnittsfläche und bilden zusammen mit dem Deckelraumteil 113 und dem mit ihnen fluchtenden Bodenraumteil 117 eine erste der vier in Fig. 12 angedeuteten, jeweils in einem Längsviertel des Behälters 111 vorgesehenen Calcinierungskammern 9. Die Dispersion durchströmt den Bodenraumteil 117 und wird darin um 180° umgelenkt und in Rohre 121 mit steigender Strömungsrichtung eingedrückt. Die Rohre 121 sind wiederum in einem Quadranten des Behälters 111 untergebracht und weisen mit ihren Innenräumen 122 eine insgesamt kleinere freie Querschnittsfläche auf als die Rohre 119.

So ist die Strömungsgeschwindigkeit in den Rohren 121 größer als in den Rohren 119, damit die Feststoffpartikel der Dispersion sicher und vollständig nach oben bis in den Deckelraumteil 115 transportiert werden. Dabei ist davon ausgegangen, daß die Anzahl der Rohre 119 und der Rohre 122 jeweils gleich ist.

In dem Deckelraumteil 115 wird die Dispersion erneut um 180° umgelenkt und abwärts in ein weiteres Bündel aus den Rohren 119 eingedrückt. Von dort gelangt die Dispersion in den Bodenraumteil 118, wo eine erneute Umlenkung um 180° in ein weiteres Bündel der Rohre 121 stattfindet. In diesen letzteren Rohren 121 wird die Dispersion mit erhöhter Strömungsgeschwindigkeit nach oben gedrückt bis in den Deckelraumteil 114, der mit dem Auslaß 15 versehen ist.

Schematisch ist dieser Strömungsverlauf der Dispersion in Fig.12 mit einer mehrfach umgelenkten gepfeilten Linie 123 angedeutet.

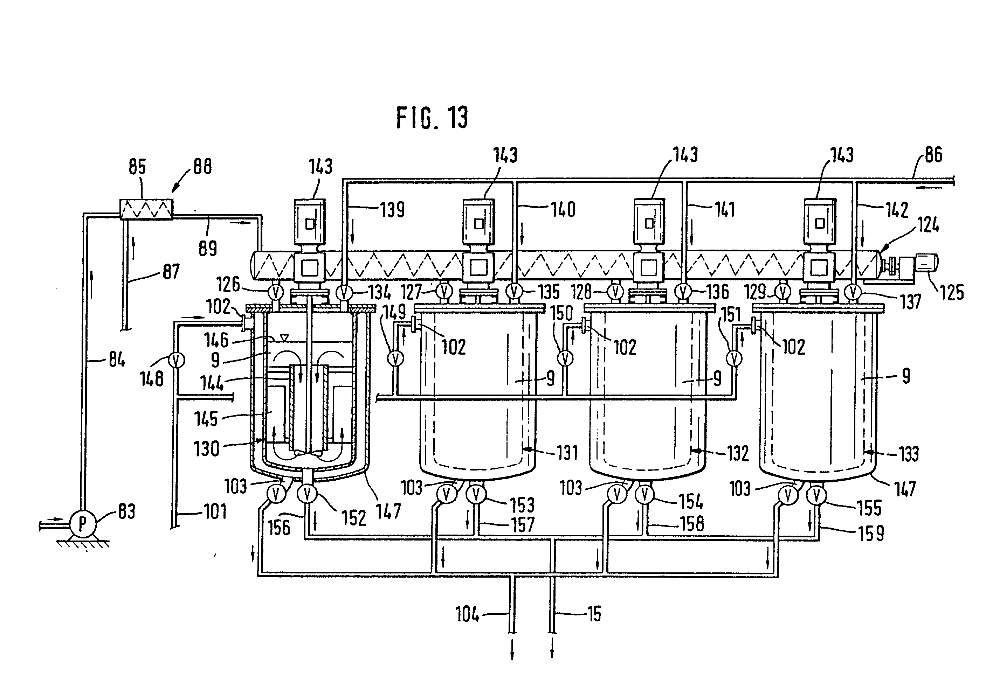

Fig.13 zeigt eine weitere Calcinierungsvorrichtung. Dort führen nur die Leitungen 84 und 87 mit Calciumsulfat-Dihydrat bzw. Magnesiumsulfat in die Mischvorrichtung 85 hinein. Die Leitung 89 führt das Gemisch in eine schnekkenartig ausgebildete, langgestreckte Fördervorrichtung 124, die durch einen Antrieb 125 drehend antreibbar ist und das Gemisch zu jeweils ein Absperrorgan 126 bis 129 aufweisenden Einlaßleitungen von Behältern 130 bis 133 transportiert. In jeden der Behälter 130 bis 133 wird ferner durch eine mit einem Absperrorgan 134 bis 137 versehene Einlaßleitung 139 bis 142 Calciniermedium gesteuert eingegeben.

Jeder der Behälter 130 bis 133 umschließt eine der Calcinierungskammern 9 und ist mit einem Rührer 143 ausgestattet. In jedem Behälter 130 bis 133 sind ferner Einbauten in Gestalt eines Leitrohrs 144 und von Strombrechern 145 zur Durchmischung und Führung der Strömung der Dispersion in der bei dem Behälter 130 durch Pfeile gekennzeichneten Weise angebracht. Die Dispersion wird also in diesem Fall erst in den Behältern 130 bis 133 drucklos angemischt und steht darin bis zu einer Spiegellinie 146, über deren Höhenlage die Leistung der Anlage einstellbar ist.

Jeder der Behälter 130 bis 133 weist ferner eine Heizeinrichtung 147 in Gestalt eines äußeren Heizmantels auf, der sich im Abstand von dem jeweiligen Behälter 130 bis 133 befindet. Der so entstehende Zwischenraum wird über die Versorgungsleitung 101 mit einem geeigneten Heizmedium beschickt, wobei vor jedem Einlaßstutzen 102 ein Absperrorgan 148 bis 151 zur wahlweisen Aktivierung der Heizeinrichtung 147 vorgesehen ist.

Jeder der Behälter 130 bis 133 weist ferner eine mit einem Absperrorgan 152 bis 155 versehene Auslaßleitung 156 bis 159 auf, die in den gemeinsamen Auslaß 15 für das $\alpha$-Calciumsulfat-Halbhydrat münden.

Die Calcinierungsvorrichtung gemäß Fig.13 funktioniert wie folgt:

Zu einem bestimmten Zeitpunkt wird der Behälter 130 bei geschlossenem Absperrorgan 152 und geöffneten Absperrorganen 126, 134 mit den Komponenten der Dispersion gefüllt. Der zugehörige Rührer 143 läuft und bewirkt eine Mischung und Zirkulation der entstehenden Dispersion. Gleichzeitig ist die zugehörige Heizeinrichtung 147 bei geöffnetem Absperrorgan 148 und geöffnetem Auslaßstutzen 103 in Betrieb. Um die Reaktion in dem Behälter 130 in diesem Füllstadium noch nicht oder noch nicht in vollem Umfang ablaufen zu lassen, kann die Heizeinrichtung 147 dieses Behälters 130 auch gedrosselt oder sogar abgestellt sein.

Während derselben Zeit, zu der der Behälter 130 mit Dispersion gefüllt wird, läuft in dem dazu parallel geschalteten Behälter 131 die Reaktion der dort schon enthaltenen Dispersion ab. Die Heizeinrichtung 147 des Behälters 131 ist dazu bei geöffnetem Absperrorgan 149 in Betrieb.

Zu derselben Zeit wird aus dem wiederum parallel geschalteten Behälter 132 das fertige $\alpha$-Calciumsulfat-Halbhydrat bei geöffnetem Absperrorgan 154 durch die Auslaßleitung 158 und den Auslaß 15 abgelassen.

Zu dieser selben Zeit ist der letzte, ebenfalls parallel geschaltete Behälter 133 in Fig.13 leer und außer Betrieb. Dieser Behälter 133 kann entweder in Reserve gehalten werden für den Fall, daß einer der Behälter 130 bis 132 ausfällt oder gewartet und repariert werden muß. Der Behälter 133 kann aber auch in den kontinuierlichen Herstellungszyklus einbezogen werden. In diesem Fall würde z.B. in dem nächsten Herstellungstakt der Behälter 133, wie zuvor für den Behälter 130 beschrieben, mit Dispersion gefüllt, während zum selben Zeitpunkt die Reaktion in dem Behälter 130 vonstatten geht und der Behälter 131 von dem hergestellten $\alpha$-Calciumsulfat-Halbhydrat entleert wird. In diesem Zyklus bliebe dann der Behälter 132 leer und außer Betrieb.

Die relative Steuerung der verschiedenen Absperrorgane in Fig. 13 geschieht in an sich bekannter Weise durch eine nicht dargestellte übergeordnete Programmsteuerung. Durch die Einlaßleitungen 139 bis 142 kann durch zusätzliche Betätigung der Absperrorgane 134 bis 137 Calciniermedium auch noch während der Reaktionsphase in die Behälter 130 bis 133 eingespeist werden, wenn dies zur Einstellung der Konzentration des Calciniermediums in der reagierenden Dispersion wünschenswert erscheint.

Bei der Calcinierungsvorrichtung gemäß Fig.14 sind Funktion und Aufbau grundsätzlich gleich wie bei der Calcinierungsvorrichtung gemäß Fig.13. Wesentlicher Unterschied ist bei der Calcinierungsvorrichtung gemäß Fig.14 jedoch der, daß Längsachsen 160 der weiterhin stehend angeordneten Behälter 130 bis 133 an den Ecken eines Quadrats auf einem Kreis 161 angeordnet sind. Die Fördervorrichtung 124 ist in diesem Fall günstig kurz. Die Leitung 89 mündet in der Längsmitte der Fördervorrichtung 124. Eine Schnecke 162 der Fördervorrichtung 124 wird in dem Fall der Fig. 14 durch den in der Drehrichtung umkehrbaren Antrieb 125 wahlweise in der einen oder der entgegengesetzten Drehrichtung angetrieben, wodurch sich eine Förderung des Gemisches von der Leitung 89 aus entweder nach links oder nach rechts, wie durch Pfeile angedeutet, ergibt.

Alle vorstehend erwähnten Behälter 80 bis 82, 111 und 130 bis 133 sind, obgleich dies in den Zeichnungen zur Vereinfachung nicht dargestellt ist, jeweils oben in an sich bekannter Weise mit einer Entlüftung versehen.

Patentanwälte
Dipl.-Ing. Horst Röse
Dipl.-Ing. Peter Kosel

Unsere Akten-Nr.: 1774/867 Ep Bad Gandersheim, 24. Januar 1983
01 Salzgitter Maschinen und
   Anlagen Aktiengesellschaft


P A T E N T A N S P R Ü C H E


1. Vorrichtung zur kontinuierlichen Calcinierung von als Nebenprodukt erhaltenem und/oder mineralischem Calciumsulfat-Dihydrat in Dispersion in einem Calciniermedium, z.B. Schwefelsäure und/oder geeigneten Salzlösungen, zu ∝-Calciumsulfat-Halbhydrat, wobei die Dispersion durch eine Eingabeeinrichtung kontinuierlich am Anfang eines Calcinierungswegs bereitstellbar ist, und wobei das ∝-Calciumsulfat-Halbhydrat am Ende des Calcinierungswegs kontinuierlich an einem Auslaß (15) austragbar ist,
dadurch gekennzeichnet, daß der Calcinierungsweg durch einen ununterbrochenen Calcinierungskanal (13) definiert ist, und daß der Calcinierungskanal (13) durch eine Anzahl Calcinierungskammern (9) und jeweils benachbarte Calcinierungskammern (9) miteinander verbindende Verbindungen (10) gebildet ist.

2. Vorrichtung nach Anspruch 1, dadurch gekennzeichnet, daß die Calcinierungskammern (9) und die Verbindungen (10) durch in einem Calcinierungsraum (7) im Abstand voneinander angeordnete Trennwände (8) gebildet sind.

3. Vorrichtung nach Anspruch 2, dadurch gekennzeichnet, daß die Trennwände (8) parallel zueinander angeordnet sind.

-2-
PK/J

4. Vorrichtung nach Anspruch 2 oder 3, dadurch gekennzeichnet, daß jeweils benachbarte Verbindungen (10) an gegenüberliegenden Seitenwänden (3, 4) des Calcinierungsraums (7) angeordnet sind.

5. Vorrichtung nach einem der Ansprüche 2 bis 4, dadurch gekennzeichnet, daß zumindest einige der Trennwände (8) zur Erzielung einer über den Calcinierungsweg differenzierten Heizwirkung auf die Dispersion unabhängig voneinander gesteuert oder geregelt beheizbar sind.

6. Vorrichtung nach einem der Ansprüche 1 bis 5, dadurch gekennzeichnet, daß der Auslaß (15) durch eine Überlaufkante (16) eines gegebenenfalls in der Höhe einstellbaren Wehrs (17) der letzten Calcinierungskammer (9) gebildet ist.

7. Vorrichtung nach Anspruch 1, dadurch gekennzeichnet, daß jede Calcinierungskammer (9) von einem vorzugsweise stehend angeordneten Behälter (37 bis 40; 55) umschlossen ist, und daß jede Verbindung (10) als verhältnismäßig kurze Leitung ausgebildet ist.

8. Vorrichtung nach Anspruch 7, dadurch gekennzeichnet, daß die Verbindungen (10) zumindest annähernd waagerecht verlaufen und jeweils im unteren Bereich der Behälter (37 bis 40; 55) aneordnet sind.

9. Vorrichtung nach Anspruch 7 oder 8, dadurch gekennzeichnet, daß der Auslaß (15) durch einen Auslaßstutzen (45; 46; 47; 48) des letzten Behälters (40) gebildet ist, wobei gegebenenfalls mehrere verschließbare Auslaßstutzen (45 bis 48) in unterschiedlichen Höhen an dem letzten Behälter (40) vorgesehen sind.

10. Vorrichtung nach einem der Ansprüche 1 bis 9, dadurch gekennzeichnet, daß jeder Calcinierungskammer (9) eine Einlaßöffnung (25) für Calciniermedium zugeordnet ist, wobei die einzelnen Einlaßöffnungen (25) unabhängig voneinander gesteuert oder geregelt mit dem Calciniermedium beaufschlagbar sind.

11. Vorrichtung nach Anspruch 10, dadurch gekennzeichnet, daß die Einlaßöffnungen (25) jeweils in eine Verbindung (10) münden.

12. Vorrichtung nach einem der Ansprüche 1 bis 11, dadurch gekennzeichnet, daß in jede Calcinierungskammer (9) ein Rührer (24) ragt.

13. Vorrichtung nach einem der Ansprüche 1 bis 12, dadurch gekennzeichnet, daß, bezogen auf die Strömungsrichtung der Dispersion, die Querschnittsfläche jeder Calcinierungskammer (9) größer als die Querschnittsfläche jeder Verbindung (10) ist.

14. Vorrichtung nach Anspruch 1, dadurch gekennzeichnet, daß der Calcinierungskanal (13) von einem in Windungen (62) geformten Rohr (63) umschlossen ist.

15. Vorrichtung nach Anspruch 14, dadurch gekennzeichnet, daß das Rohr (63) schraubenartig geformt ist.

16. Vorrichtung nach Anspruch 14 oder 15, dadurch gekennzeichnet, daß jede Windung (62) aus quer zur Strömungsrichtung geteilten Teilen (65, 66) lösbar zusammengesetzt ist.

17. Vorrichtung nach einem der Ansprüche 14 bis 16, dadurch gekennzeichnet, daß jede Windung (62) mit einer Einlaßöffnung (25) für Calciniermedium versehen ist.

18. Vorrichtung nach einem der Ansprüche 14 bis 17, dadurch gekennzeichnet, daß die Windungen (62) von einem Innenrohr (69) durchdrungen und von einem Außenrohr (70) umgeben sind, daß Innenrohr (69) und Außenrohr (70) an ihren Enden dicht miteinander verbunden sind, und daß eine Heizkammer (73) zwischen Innenrohr (69) und Außenrohr (70) mit einem Heizmedium beaufschlagbar ist.

19. Vorrichtung nach Anspruch 1, dadurch gekennzeichnet,
daß wenigstens zwei vorzugsweise stehend angeordnete
Behälter (80 bis 82) in Reihe geschaltet sind, daß
jeder Behälter (80 bis 82) als Calcinierungskammer
(9) die Innenräume (99) einer Anzahl endseitig mit
Rohrböden (94, 95) dicht verbundener Rohre (96) sowie
einen Deckelraum (92) und einen Bodenraum (98) aufweist, und daß ein Zwischenraum (100) zwischen den
Rohren (96) von einem Heizmedium durchströmbar ist.

20. Vorrichtung nach Anspruch 19, dadurch gekennzeichnet,
daß eine Auslaßleitung jedes Behälters (80 bis 82)
über ein Wegeventil (108) mit einer Auffangwanne (109)
verbindbar ist.

21. Vorrichtung nach Anspruch 19 oder 20, dadurch gekennzeichnet, daß der Bodenraum (98) des ersten (80) bis
einschließlich des vorletzten (81) Behälters jeweils
mit dem Deckelraum (92) des nachfolgenden Behälters
(81, 82) verbunden ist.

22. Vorrichtung nach Anspruch 1, dadurch gekennzeichnet,
daß alle Calcinierungskammern (9) innerhalb eines
gemeinsamen vorzugsweise stehend angeordneten Behälters (111) in Reihe geschaltet sind, daß jede Calcinierungskammer (9) durch die Innenräume (120, 122)
einer Anzahl endseitig mit Rohrböden (94, 95) dicht
verbundener Rohre (119, 121) sowie einen jeweils mit
den Rohren (119, 121) fluchtend angeordneten Deckelraumteil (113 bis 115) und Bodenraumteil (117, 118)
gebildet ist, daß abwechselnd die Deckelraumteile
(113 bis 115) und die Bodenraumteile (117, 118) aufeinanderfolgender Calcinierungskammern (9) miteinander verbunden sind, und daß ein Zwischenraum (100)
zwischen den Rohren (119, 121) von einem Heizmedium

0085382

durchströmbar ist.

23. Vorrichtung nach Anspruch 22, dadurch gekennzeichnet, daß die freie Querschnittsfläche der Innenräume (120) der Rohre (119) der Calcinierungskammern (9) mit fallender Strömungsrichtung der Dispersion größer ist als die freie Querschnittsfläche der Innenräume (122) der Rohre (121) der Calcinierungskammern (9) mit steigender Strömungsrichtung der Dispersion.

24. Vorrichtung nach Anspruch 22 oder 23, dadurch gekennzeichnet, daß die Deckelraumteile (113 bis 115) und die Bodenraumteile (117, 118) unter anderem durch jeweils zwischen einem Deckel (91) und einem Boden (97) sowie dem benachbarten Rohrboden (94; 95) des Behälters (111) vorgesehene Trennwände (112;116) begrenzt sind.

25. Vorrichtung nach einem der Ansprüche 19 bis 24, dadurch gekennzeichnet, daß die Eingabeeinrichtung (88) eine Zwangsförderpumpe (83) und eine Mischvorrichtung (85) für die Komponenten der Dispersion aufweist.

26. Vorrichtung nach Anspruch 1, dadurch gekennzeichnet, daß jede Calcinierungskammer (9) in einem gesonderten, ein Rührwerk (143) aufweisenden Behälter (130 bis 133) vorgesehen ist, daß wenigstens drei solche Behälter zueinander parallel geschaltet sind, wobei die Dispersion oder ihre Komponenten jedem Behälter (130 bis 133) nacheinander durch mit Absperrorganen (126 bis 129, 134 bis 137) versehene Einlaßleitungen (139 bis 142) zuführbar sind, und wobei jeder Behälter (130 bis 133) eine Auslaßleitung (156 bis 159) für das $\alpha$-Calciumsulfat-Halbhydrat aufweist, die durch ein Absperrorgan (152 bis 155) wahlweise mit dem gemeinsamen Auslaß (15) verbindbar ist, und daß jeder Behälter (130 bis 133) mit einer Heizeinrichtung (147) versehen ist.

27. Vorrichtung nach Anspruch 26, dadurch gekennzeichnet, daß jeder Behälter (130 bis 133) Einbauten (144, 145) zur Führung der Strömung der Dispersion aufweist.

28. Vorrichtung nach Anspruch 26 oder 27, dadurch gekennzeichnet, daß oberhalb der Behälter (130 bis 133) eine mit einer der Einlaßleitungen jedes Behälters (130 bis 133) verbundene Fördervorrichtung (124) für die Komponenten der Dispersion mit Ausnahme des durch eine gesonderte Einlaßleitung (139 bis 142) jedem Behälter (130 bis 133) zuführbaren Calciniermediums angeordnet ist.

29. Vorrichtung nach Anspruch 28, dadurch gekennzeichnet, daß einem Einlaß der Fördervorrichtung (124) eine Mischvorrichtung (85) für die Komponenten der Dispersion mit Ausnahme des Calciniermediums vorgeschaltet ist.

30. Vorrichtung nach einem der Ansprüche 26 bis 29, dadurch gekennzeichnet, daß Längsachsen (160) der Behälter (130 bis 133) zumindest annähernd auf einem Kreis (161) angeordnet sind.

Patentanwälte
Dipl.-Ing. Horst Röse
Dipl.-Ing. Peter Kosel

FIG.2

FIG.4

FIG.3

FIG.1

1/6

0085382

FIG.6

FIG.5

FIG.7

**FIG.9**

**FIG.8**

FIG. 10

0085382

FIG.11

FIG.12

FIG.14

FIG. 13

Europäisches
Patentamt

**EUROPÄISCHER RECHERCHENBERICHT**

**0085382**
Nummer der Anmeldung

EP  83 10 0631

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| X | FR-A-1 416 273 (IMPERIAL CHEMICAL INDUSTRIES LTD.) * Zusammenfassung A,1,2,4,5,6,B,1,3; | 1,2,5, 12 | C 04 B  11/02 |
| X | GB-A-1 198 807 (IMPERIAL CHEMICAL INDUSTRIES LTD.) * Patentansprüche 1,3; Seite 4, Zeilen 43-50 * | 1,26, 28 | |
| A | AU-A- 67 143 (CONZINC RIOTINTO OF AUSTRALIA LTD.) * Patentansprüche 1,2,4,8 * | 1,19, 22,25 | |
| A | FR-A-2 294 985 (HOECHST A.G.) * Seite 4, 1. Absatz in Verbindung mit der Abbildung * | 1 | |
| A | DE-B-1 274 488 (BPB INDUSTRIES LDT., LONDON) * Insgesamt * | 1 | **RECHERCHIERTE SACHGEBIETE (Int. Cl. ³)** <br> C 04 B <br> B 01 F <br> B 28 C |

Der vorliegende Recherchenbericht wurde für alle Patentansprüche erstellt.

| Recherchenort DEN HAAG | Abschlußdatum der Recherche 20-04-1983 | Prüfer STANGE R.L.H |
|---|---|---|